# EUROPÄISCHE PATENTANMELDUNG

(11) **EP 3 670 246 A1**
(43) Veröffentlichungstag der Anmeldung: **24.06.2020**
(21) Anmeldenummer: 19217459.7
(22) Anmeldetag: 18.12.2019
(51) Int. Cl.: B60L 53/14, B60L 53/67, H02J 1/10, H02J 7/00, B60L 53/65

(54) **LADEANORDNUNG FÜR FLURFÖRDERZEUGE**

(30) Priorität: 21.12.2018 DE 102018133512
(71) Anmelder: Jungheinrich Aktiengesellschaft, 22047 Hamburg (DE)
(72) Erfinder: von Mirbach-Wahn, Lennart, 22763 Hamburg (DE); Ruschmeier, Dr. Kai, 22047 Hamburg (DE); Rosendahl, Raphael, 25451 Quickborn (DE); Frese, Fabian, 22846 Norderstedt (DE)
(74) Vertreter: Hauck Patentanwaltspartnerschaft mbB

(57) **Zusammenfassung**

Ladeanordnung umfassend mehrere Ladegeräte zum Laden der Batterien von Flurförderzeugen, wobei die Ladeanordnung dazu ausgebildet ist, zu erkennen, ob eine Batterie eines Flurförderzeugs mit mindestens zwei Ladegeräten der mehreren Ladegeräte verbunden ist und die Batterie über die mindestens zwei Ladegeräte gleichzeitig zu laden, wenn eine Verbindung zu den mindestens zwei Ladegeräten erkannt wurde

## Beschreibung

Die Erfindung betrifft eine Ladeanordnung umfassend mehrere Ladegeräte zum Laden der Batterien von Flurförderzeugen. Zudem betrifft die Erfindung ein Ladeverfahren zum Laden der Batterien von Flurförderzeugen. Auch betrifft die Erfindung ein Ladegerät.

Bei der Verwendung von elektrisch angetriebenen Flurförderzeugen werden häufig mehrere Ladegeräte bereitgestellt, beispielsweise in Werk- oder Lagerhallen aufgestellt, um das Aufladen der Batterien der Flurförderzeuge zu ermöglichen. Zumeist werden hierfür die Flurförderzeuge in der Nähe eines der Ladegeräte abgestellt und über ein Ladekabel mit einem der Ladegeräte verbunden. Dies kann beispielsweise in Pausenzeiten oder über Nacht geschehen. Um die Kosten relativ gering zu halten, sind üblicherweise weniger Ladegeräte als Flurförderzeuge vorgesehen, was dazu führen kann, dass kein Ladegerät mehr für ein noch zu ladendes Flurförderzeug frei ist. Dies kommt insbesondere dann vor, wenn die Flurförderzeuge regelmäßig zur gleichen Zeit geladen werden sollen, wie beispielsweise bei den erwähnten Pausenzeiten. Dies ist insbesondere nachteilig, da ein Ladegerät - je nach Restladung der Batterie des angeschlossenen Flurförderzeugs - relativ lange belegt sein kann.

Aus EP 1 630 925 A2 ist ein Ladegerät bekannt, welches über eine integrierte oder eine externe Umschaltvorrichtung verfügt, mit der jeweils eine von zwei angeschlossenen Batterien mit Leistung versorgt werden kann. Ist die zunächst versorgte Batterie vollständig geladen, schaltet die Umschaltvorrichtung den Ladevorgang auf die zweite Batterie um.

Der Erfindung liegt die Aufgabe zugrunde, einen flexibleren Einsatz von Ladegeräten zu ermöglichen.

Die Erfindung löst die Aufgabe durch eine Ladeanordnung gemäß Anspruch 1, durch ein Ladeverfahren gemäß Anspruch 7 sowie durch ein Ladegerät gemäß Anspruch 13. Vorteilhafte Ausgestaltungen sind Gegenstand der Unteransprüche, der Beschreibung sowie der Figuren.

Die erfindungsgemäße Ladeanordnung umfasst mehrere Ladegeräte zum Laden der Batterien von Flurförderzeugen, wobei die Ladeanordnung dazu ausgebildet ist, zu erkennen, ob eine Batterie eines Flurförderzeugs mit mindestens zwei Ladegeräten der mehreren Ladegeräte verbunden ist und die Batterie über die mindestens zwei Ladegeräte gleichzeitig zu laden, wenn eine Verbindung zu den mindestens zwei Ladegeräten erkannt wurde.

Das erfindungsgemäße Ladeverfahren sieht mehrere Ladegeräte zum Laden der Batterien von Flurförderzeugen vor und umfasst die Schritte: Erkennen, ob eine Batterie eines Flurförderzeugs mit mindestens zwei Ladegeräten der mehreren Ladegeräte verbunden ist, Laden der Batterie über die mindestens zwei Ladegeräte gleichzeitig, wenn eine Verbindung zu den mindestens zwei Ladegeräten erkannt wurde.

Die Ladeanordnung und das Ladeverfahren werden im Folgenden gemeinsam erläutert. Ausführungen zu der Ladeanordnung gelten auch für das Ladeverfahren und umgekehrt. Insbesondere ist die Ladeanordnung zur Ausführung des Ladeverfahrens vorgesehen und geeignet; das Ladeverfahren kann mit der Ladeanordnung ausgeführt werden.

Wie eingangs erläutert, können über die mehreren Ladegeräte mehrere Batterien von Flurförderzeugen gleichzeitig geladen werden. Dies geschieht üblicherweise durch direkten Anschluss des Flurförderzeugs an das Ladegerät, also ohne Entnahme der Batterie aus dem Flurförderzeug. Im Folgenden wird daher auch vom Laden der Flurförderzeuge gesprochen, was zu verstehen ist als das Laden der Batterie des jeweiligen Flurförderzeugs. Grundsätzlich ist jedoch auch eine Entnahme der Batterie für das Laden möglich. Bei den Flurförderzeugen kann es sich beispielsweise um Gabelstapler handeln. Jedes der Ladegeräte kann mindestens einen Ladeanschluss aufweisen, bestehend insbesondere aus einem sich von dem jeweiligen Ladegerät forterstreckenden Ladekabel und einem an dem freien Ende des Ladekabels angeordneten Ladestecker. Der Ladestecker kann mit einer Steckaufnahme der Batterie eines Flurförderzeugs verbunden werden und somit gemeinsam mit der Steckaufnahme eine elektrische Steckverbindung bilden. Die Ladegeräte können insbesondere über jeweils mindestens eine Ladeeinheit verfügen, die den Ladevorgang ausführt, insbesondere den erläuterten Ladeanschluss aufweist. Ein Ladegerät kann mehrere derartige Ladeeinheiten aufweisen, die insbesondere jeweils über einen Ladeanschluss verfügen können. So können beispielsweise zwei Ladeeinheiten eines Ladegeräts mit demselben Flurförderzeug bzw. dessen Batterie verbunden werden, um mit einem höheren Strom zu laden. Die Ladegeräte können jeweils über eine Steuereinheit verfügen zur Steuerung der durch das jeweilige Ladegerät ausgeführten Ladevorgänge, insbesondere zur Koordination zwischen den Ladeeinheiten. Unter der Batterie des Flurförderzeugs sind vorliegend natürlich wiederaufladbare Batterien zu verstehen.

Erfindungsgemäß kann die Ladeanordnung erkennen, ob eine Batterie eines Flurförderzeugs mit mehr als einem der Ladegeräte der Ladeanordnung verbunden ist. Es kann also erkannt werden, ob ein einziges Flurförderzeug bzw. dessen Batterie gleichzeitig mit mehreren Ladegeräten verbunden ist. Zum Austausch diesbezüglicher Information können die Ladegeräte untereinander kommunizieren, insbesondere können die Steuereinheiten der Ladegeräte Informationen über ihre Belegung untereinander austauschen. Auch kann eine zentrale Steuereinheit vorgesehen sein, die Zugriff auf bevorzugt alle Ladegeräte der Ladeanordnung hat und die Belegungszustände auslesen kann. Die Kommunikation kann beispielsweise über die Ladeverbindung erfolgen.

Erfindungsgemäß ist es dabei möglich, die Batterie über zwei oder auch mehr Ladegeräte gleichzeitig zu laden, wenn eine Verbindung der Batterie zu zwei oder weiteren Ladegeräten erkannt wurde. Die Batterie kann insbesondere mit allen Ladegeräten, an die sie angeschlossen ist, gleichzeitig geladen werden. Die Ladeanschlüsse unterschiedlicher Ladegeräte können folglich zur gemeinsamen Verbindung mit der Batterie nur eines Flurförderzeugs ausgebildet sein. Beispielsweise kann ein Y-Verbinder zur Verbindung des Flurförderzeugs mit zwei Ladegeräten verwendet werden zur Herstellung der Ladeverbindung und/oder einer Kommunikationsverbindung. Entsprechend kann ein Flurförderzeug bzw. dessen Batterie zur Verbindung mit mehr als einem Ladegerät ausgebildet sein, kann insbesondere mehrere Steckaufnahmen für Ladestecker mehrerer Ladegeräte aufweisen. Im Gegensatz zum Stand der Technik sieht die Erfindung vor, ein Flurförderzeug zur gleichen Zeit über mehrere Ladegeräte zu laden. Somit kann das Flurförderzeug bzw. dessen Batterie insbesondere mit einem höheren Ladestrom versorgt und somit der Ladevorgang verkürzt werden. So kann beispielsweise auch in relativ kurzen Pausenzeiten die an mehrere Ladegeräte angeschlossene Batterie bereits ausreichend weit aufgeladen werden. Die Ladegeräte sind somit schnell wieder verfügbar für das Laden weiterer Batterien. Dies ist insbesondere von Vorteil, wenn keines oder nur wenige der Ladegeräte über mehrere Ladeeinheiten verfügen, die gleichzeitig die Batterie eines Flurförderzeugs laden können. Es kann folglich auch mit zwei separaten Ladegeräten (anstatt mit zwei Ladeeinheiten) ein Hochstromladen oder Schnellladen der angeschlossenen Batterie erfolgen. Das gemeinsame, gleichzeitige Laden einer einzelnen Batterie eines Flurförderzeugs über mehrere Ladegeräte ermöglicht somit einen flexibleren Einsatz der Ladegeräte. Es kann dabei insbesondere erkannt werden, ob eine Batterie eines Flurförderzeugs mit einem oder mit mindestens zwei Ladegeräten verbunden ist und die Batterie kann dann wahlweise über ein Ladegerät geladen werden, wenn die Batterie nur mit diesem einen Ladegerät verbunden ist und über die mindestens zwei Ladegeräte gleichzeitig geladen werden, wenn die Batterie mit diesen mindestens zwei Ladegeräten verbunden ist. Hierzu kann die Ladeanordnung, insbesondere die Steuereinheiten der Ladegeräte bzw. die zentrale Steuereinheit ausgebildet sein.

Nach einer Ausgestaltung sind die Ladegeräte voneinander getrennt ausgebildet. Die Ladegeräte können insbesondere räumlich voneinander getrennt, beispielsweise in einem Abstand zueinander aufgestellt sein. Grundsätzlich können die Ladegeräte jedoch auch nah beieinander, insbesondere aneinander angrenzend angeordnet sein. Unter der getrennten Ausbildung ist insbesondere zu verstehen, dass jedes der Ladegeräte über eine eigene Steuereinheit zur Steuerung seiner Ladevorgänge aufweist. So kann die Steuereinheit eines Ladegeräts insbesondere zur Ansteuerung der Ladeeinheit oder der Ladeeinheiten des Ladegeräts dienen. Die Ladeeinheiten der jeweiligen Ladegeräte sind hingegen nicht in diesem Sinne voneinander getrennt, sondern bilden gemeinsam einen Teil eines Ladegeräts, unterliegen insbesondere der gemeinsamen Steuerung durch die Steuereinheit des Ladegeräts. Die Ladeeinheiten eines Ladegeräts sind insbesondere auch nicht räumlich voneinander getrennt. Die Verwendung insbesondere derart voneinander getrennter Ladegeräte zum gleichzeitigen Laden nur eines Flurförderzeugs erlaubt die oben erläuterte flexible Verwendung der Ladegeräte.

Nach einer Ausgestaltung sind die Ladegeräte der Ladeanordnung dazu ausgebildet, wahlweise als Master oder als Slave zu arbeiten, wobei eines der mindestens zwei Ladegeräte als Master den gemeinsamen Ladevorgang steuert und die weiteren der mindestens zwei Ladegeräte als Slave arbeiten, wenn das Laden der Batterie über die mindestens zwei Ladegeräte erfolgt. Entsprechend kann das Ladeverfahren die Schritte umfassen: Definition eines der mindestens zwei Ladegeräte als Master und der übrigen der mindestens zwei Ladegeräte als Slave, wenn das Laden der Batterie über die mindestens zwei Ladegeräte erfolgt, wobei das als Master definierte Ladegerät den gemeinsamen Ladevorgang steuert. Wie bereits erwähnt, können die Ladegeräte beispielsweise über ihre eigenen Steuereinheiten und/oder über eine zentrale Steuereinheit untereinander kommunizieren und somit insbesondere Informationen über ihre jeweiligen Belegungszustände, also die angeschlossenen Batterien, austauschen. Ist nun ein Flurförderzeug bzw. dessen Batterie an mehr als ein Ladegerät angeschlossen, so erfolgt nach dieser Ausgestaltung eine Abstimmung der mit der Batterie verbundenen Ladegeräte bezüglich des ausführenden Ladevorgangs. Hierbei übernimmt eines der angeschlossenen Ladegeräte als Master die Steuerung des gemeinsamen, gleichzeitigen Ladevorgangs, bestimmt also insbesondere die durch jedes mit der Batterie verbundene Ladegeräte aufzubringende Ladeleistung und/oder den Ladestrom und/oder die Ladespannung. Die weiteren an dem Ladevorgang beteiligten Ladegeräte fungieren gegenüber dem Master-Ladegerät als Slave-Ladegerät, erhalten also durch das Master-Ladegerät Vorgaben für den auszuführenden Ladevorgang, insbesondere die erwähnten Ladegrößen. Somit kann trotz des Ladens der Batterie über mehrere Ladegeräte gleichzeitig ein sicherer Ladevorgang gewährleistet werden, insbesondere kann eine Überlastung der zu ladenden Batterie vermieden werden.

Nach einer diesbezüglichen Ausgestaltung der Ladeanordnung sind die als Slave definierten Ladegeräte dazu ausgebildet, den Ladevorgang als Master fortzuführen, wenn der Ladevorgang durch das bisherige Master-Ladegerät beendet wird. Das Ladeverfahren kann entsprechend das Fortführen des Ladevorgangs durch eines der Slave-Ladegeräte als Master vorsehen, wenn der Ladevorgang durch das bisherige Master-Ladegerät beendet wird. Nach dieser Ausgestaltung kann flexibel auf das Beenden der Ladevorgänge durch einzelne oder auch mehrere der am gemeinsamen Ladevorgang beteiligten Ladegeräte reagiert werden. Der Ladevorgang kann durch das bisher als Master-Ladegerät fungierende Ladegerät beispielsweise durch eine Trennung dieses Ladegeräts von der Batterie bedingt sein. Eines der weiterhin mit der Batterie verbundenen Ladegeräte übernimmt dann die Funktion des Master-Ladegeräts und steuert somit den Ladevorgang für das oder die verbleibenden Slave-Ladegeräte. Somit kann der Ladevorgang fortgesetzt werden, auch wenn das Master-Ladegerät von der zu ladenden Batterie getrennt wird, beispielsweise weil es zum Laden einer anderen Batterie verwendet werden soll. Unabhängig von dieser Ausgestaltung kann auch vorgesehen sein, dass weitere Ladegeräte einem bereits laufenden gleichzeitigen Ladevorgang einer Batterie durch mehrere Ladegeräte zugeschaltet werden, also insbesondere weitere Ladegeräte über ihre Ladeanschlüsse mit dem Flurförderzeug verbunden werden. So können sich diese zugeschalteten Ladegeräte als Slave-Ladegeräte dem bereits als Master arbeitenden Ladegerät unterwerfen. Somit kann auch ein bereits laufender Ladevorgang durch weitere Ladegeräte ergänzt werden.

Nach einer Ausgestaltung ist die Ladeanordnung dazu ausgebildet, das Bestehen einer Ladeverbindung zwischen der Batterie und den mindestens zwei Ladegeräten durch Auslesen einer eindeutigen Identifikation der mit den Ladegeräten verbundenen Batterie und/oder des die Batterie tragenden Flurförderzeugs zu erkennen. Das Ladeverfahren kann folglich den Schritt aufweisen: Erkennen der Verbindung der Batterie mit den mindestens zwei Ladegeräten durch Auslesen einer eindeutigen Identifikation der mit den Ladegeräten verbundenen Batterie und/oder einer eindeutigen Identifikation des die Batterie tragenden Flurförderzeugs. Beispielsweise kann eine eindeutige Fahrzeugidentifikation, beispielsweise eine Fahrzeug-Identifikationsnummer, ausgelesen werden. Das Auslesen der Identifikation kann insbesondere durch die jeweiligen Steuereinheiten der mit der Batterie verbundenen Ladegeräte oder durch die zentrale Steuereinheit erfolgen. Zum Auslesen können insbesondere die zwischen den Ladegeräten und der Batterie bzw. dem Flurförderzeug bestehenden Ladeverbindungen genutzt werden. Auch kann eine zusätzliche, kabelgebundene oder kabellose, Verbindung zwischen den Ladegeräten bzw. deren Steuereinheiten und/oder der zentralen Steuereinheit und den jeweiligen Flurförderzeugen vorgesehen sein zur Übertragung der auszulesenden Daten. Insbesondere kann auf diese Weise direkt mit einem Batteriemanagementsystem der Batterie kommuniziert werden. Kabellos kann beispielsweise über RFID (Radio-Frequency IDentification), insbesondere über NFC (Near Field Communication) kommuniziert werden. Somit können insbesondere alle Ladegeräte der Ladeanordnung bzw. alle an dem Ladeverfahren beteiligten Ladegeräte Informationen über ihre Belegungszustände austauschen bzw. an die zentrale Steuereinheit übermitteln. Es kann so festgestellt werden, ob in dem somit gebildeten Ladegerät-Netzwerk ein Flurförderzeug bzw. dessen Batterie mit mehr als einem Ladegerät verbunden ist. Sind mehrere Ladegeräte mit einem Flurförderzeug bzw. dessen Batterie verbunden, so kann die oben erläuterte Steuerung des Ladeverfahrens über Master und Slave erfolgen.

Nach einer Ausgestaltung weist zumindest eines der Ladegeräte der Ladeanordnung mindestens zwei Ladeeinheiten auf, wobei die Ladeeinheiten desselben Ladegeräts dazu ausgebildet sind, die Batterien unterschiedlicher Flurförderzeuge zu laden. Das Ladeverfahren kann somit vorsehen, dass die Batterien unterschiedlicher Flurförderzeuge durch die Ladeeinheiten desselben Ladegeräts geladen werden. Wie bereits oben erwähnt, werden die Ladevorgänge insbesondere durch Ladeeinheiten des jeweiligen Ladegeräts durchgeführt. Die Ladegeräte können dabei mehrere Ladeeinheiten aufweisen, die bevorzugt durch die gemeinsame Steuereinheit des jeweiligen Ladegeräts gesteuert werden. So können auch vorliegend die mindestens zwei Ladeeinheiten des einen Ladegeräts durch die Steuereinheit des Ladegeräts angesteuert werden. Nach dieser Ausgestaltung kann ein Ladegerät dazu verwendet werden, mindestens zwei Batterien unterschiedlicher Flurförderzeuge gleichzeitig zu laden. Dies ermöglicht einen umso flexibleren Einsatz der Ladegeräte, wie später noch weiter ausgeführt wird.

Die Erfindung betrifft zudem ein System aus mindestens einem Flurförderzeug und einer wie oben beschriebenen Ladeanordnung, wobei die Batterie des Flurförderzeugs über die mindestens zwei Ladegeräte gleichzeitig geladen wird. Auch ein mit mindestens zwei Ladegeräten zum Laden seiner Batterie verbundenes Flurförderzeug ist somit Gegenstand der vorliegenden Erfindung.

Die Aufgabe wird darüber hinaus gelöst durch ein Ladegerät zum Laden der Batterien von Flurförderzeugen, welches mindestens zwei Ladeeinheiten umfasst, wobei die Ladeeinheiten des Ladegeräts dazu ausgebildet sind, die Batterien unterschiedlicher Flurförderzeuge gleichzeitig zu laden. Es kann also auch alternativ zu dem Laden einer Batterie eines Flurförderzeugs durch mindestens zwei Ladegeräte vorgesehen sein, mindestens zwei Flurförderzeuge bzw. deren Batterien durch ein einziges Ladegerät gleichzeitig zu laden. Auch dies ermöglicht einen flexibleren Einsatz der Ladegeräte gegenüber dem eingangs erläuterten Stand der Technik. Die mindestens zwei Ladeeinheiten können dabei jeweils über einen Ladeanschluss verfügen, mit welchen die Ladeeinheiten mit dem Flurförderzeug bzw. dessen Batterie verbunden sind, wie oben erläutert. Insbesondere kann auch ein diesbezügliches Ladeverfahren zum Laden der Batterien mehrerer Flurförderzeuge durch ein Ladegerät vorgesehen sei, umfassend die Schritte: Erkennen, ob mindestens zwei Batterien, insbesondere unterschiedlicher Flurförderzeuge, mit dem einen Ladegerät verbunden sind, Laden der mindestens zwei Batterien über das mindestens eine Ladegerät gleichzeitig, wenn mindestens zwei Batterien mit dem einen Ladegerät verbunden sind. Mehrere Ladeeinheiten eines Ladegeräts können somit nicht nur zum gemeinsamen Laden, insbesondere Hochstrom-/Schnellladen, der Batterie eines Flurförderzeugs sondern auch zum einzelnen Laden, insbesondere zum Normalladen, mehrerer Flurförderzeuge verwendet werden. Hierbei können die Ladeparameter für die Ladeeinheiten jeweils getrennt bestimmt werden. Zudem kann eine Datenverbindung zu dem jeweiligen Batteriemanagementsystem der Batterien und/oder ein Erkennen der Fahrzeug-/Batterie-ID vorgesehen sein.

Ausgestaltungen der Erfindung werden im Folgenden anhand von Figuren erläutert. Es zeigen:
- Figur 1: eine Ladeanordnung nach dem Stand der Technik,
- Figur 2: eine erfindungsgemäße Ladeanordnung mit zwei Ladegeräten,
- Figur 3: eine erfindungsgemäße Ladeanordnung mit sechs Ladegeräten,
- Figur 4: die Ladeanordnung aus Figur 3 bei anderer Verwendung der Ladegeräte, und
- Figur 5: ein Ablaufschema für ein erfindungsgemäßes Ladeverfahren.

Soweit nichts anderes angegeben ist, bezeichnen im Folgenden gleiche Bezugszeichen gleiche Gegenstände.

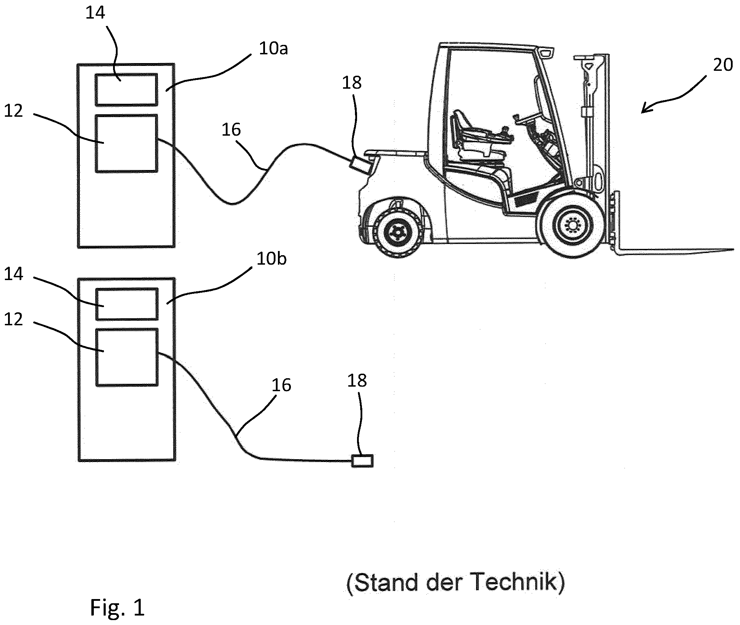

Figur 1 zeigt eine Ladeanordnung nach dem Stand der Technik. Es sind zwei Ladegeräte 10a, 10b zu erkennen, welche jeweils über eine Ladeeinheit 12, ein sich von der Ladeeinheit 12 forterstreckendes Ladekabel 16 mit einem Ladestecker 18 an dessen freien Ende sowie über eine Steuereinheit 14 verfügen. Ein Flurförderzeug 20 ist mit dem Ladegerät 10a verbunden zum Laden einer nicht dargestellten Batterie des Flurförderzeugs 20. Der Ladestecker 18 des Ladegeräts 10a wirkt hierbei mit einer nicht dargestellten Steckaufnahme des Flurförderzeugs 20 bzw. dessen Batterie zusammen. Das Ladegerät 10b ist in Figur 1 nicht in Verwendung. Ein weiteres Flurförderzeug könnte jedoch über das Ladegerät 10b geladen werden.

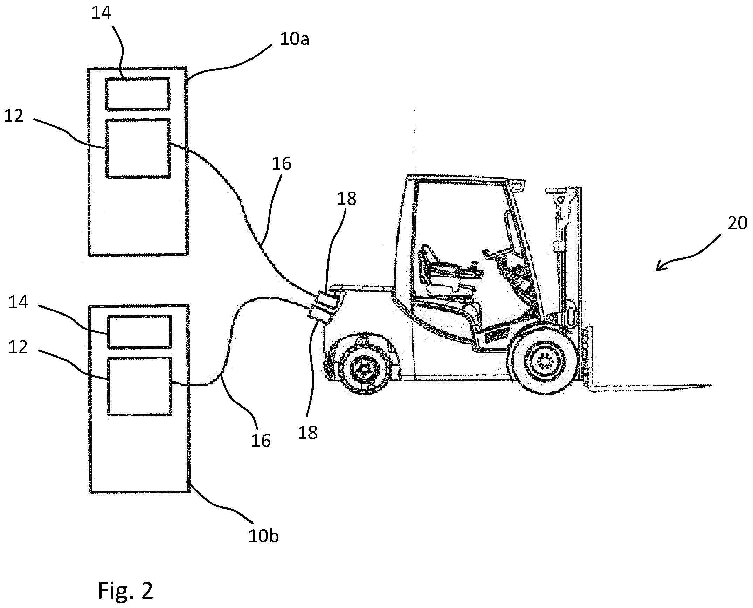

In Figur 2 ist eine erfindungsgemäße Ausgestaltung einer Ladeanordnung dargestellt. Die Ladegeräte 10a, 10b sind hierbei beide über ihre Ladekabel 16 und ihre Ladestecker 18 mit dem Flurförderzeug 20 verbunden und sind - im Gegensatz zu den Ladegeräten aus Figur 1 - dazu ausgebildet, gemeinsam die Batterie des Flurförderzeugs 20 zu laden. Das Flurförderzeug 20 bzw. dessen Batterie ist entsprechend zur Verbindung mit zumindest zwei Ladegeräten ausgebildet. Die Batterie des Flurförderzeugs 20 bzw. das Flurförderzeug 20 ist dabei zur Verbindung mit zwei Ladesteckern 18 ausgebildet. Erfindungsgemäß ist die Ladeanordnung der Figur 2 dazu ausgebildet, zu erkennen, ob die Batterie des Flurförderzeugs 20 nur mit einem der Ladegeräte 10a, 10b oder mit beiden der Ladegeräte 10a, 10b verbunden ist. In dem in Figur 2 dargestellten Beispiel der Verbindung beider Ladegeräte 10a, 10b mit dem Flurförderzeug 20 ermöglicht die Ladeanordnung das Laden der Batterie des Flurförderzeugs 20 sowohl über das Ladegerät 10a als auch über das Ladegerät 10b gleichzeitig. Sowohl die Ladeeinheit 12 des Ladegeräts 10a als auch die Ladeeinheit 12 des Ladegeräts 10b versorgen also die Batterie des Flurförderzeugs 20 gleichzeitig mit Ladeleistung. Somit kann insbesondere eine höhere Ladeleistung erreicht werden als mit nur einem Ladegerät; beispielsweise kann somit eine Hochstrom- oder Schnellladung der Batterie erfolgen. Die Steuerung dieses gemeinsamen Ladevorgangs kann dabei über die Steuereinheiten 14 der Ladegeräte 10a, 10b oder auch über eine nicht dargestellte zentrale Steuereinheit erfolgen. Insbesondere kann eines der Ladegeräte 10a, 10b hierbei als Master fungieren, während das andere der Ladegeräte als Slave arbeitet. Beispielsweise kann das Ladegerät 10a als Master-Ladegerät arbeiten, während das Ladegerät 10b als Slave-Ladegerät arbeitet. Somit kann die Steuereinheit 14 des Ladegeräts 10a den gemeinsamen Ladevorgang steuern, beispielsweise eine durch die Ladeeinheiten 12 des Ladegeräts 10a sowie durch die Ladeeinheit 12 des Ladegeräts 10b vorzugebene Ladeleistung (insbesondere einen Ladestrom und/oder eine Ladespannung) vorgeben. Die Steuereinheit 14 des Ladegeräts 10a kann somit Steuerbefehle an die Steuereinheit 14 des als Slave arbeitenden Ladegeräts 10b übermitteln. Die Ladegeräte 10a, 10b können sich hierfür in einem gemeinsamen Ladegeräte-Netzwerk befinden. Beispielsweise können die Ladegeräte 10a, 10b über eine Kabelverbindung oder auch kabellos miteinander kommunizieren, insbesondere über die erwähnte zentrale Steuereinheit. Auch ist denkbar, dass die Ladegeräte 10a, 10b über ihre Ladeverbindungen mit dem Flurförderzeug 20 kommunizieren, beispielsweise über ein Batteriemanagementsystem des Flurförderzeugs. Die erfindungsgemäß vorgesehene Möglichkeit, die Batterie eines Flurförderzeugs über mehrere Ladegeräte gleichzeitig zu laden, erlaubt einen flexibleren Einsatz der Ladegeräte der Ladeanordnung, wie insbesondere durch die folgenden Ausführungsbeispiele deutlich wird.

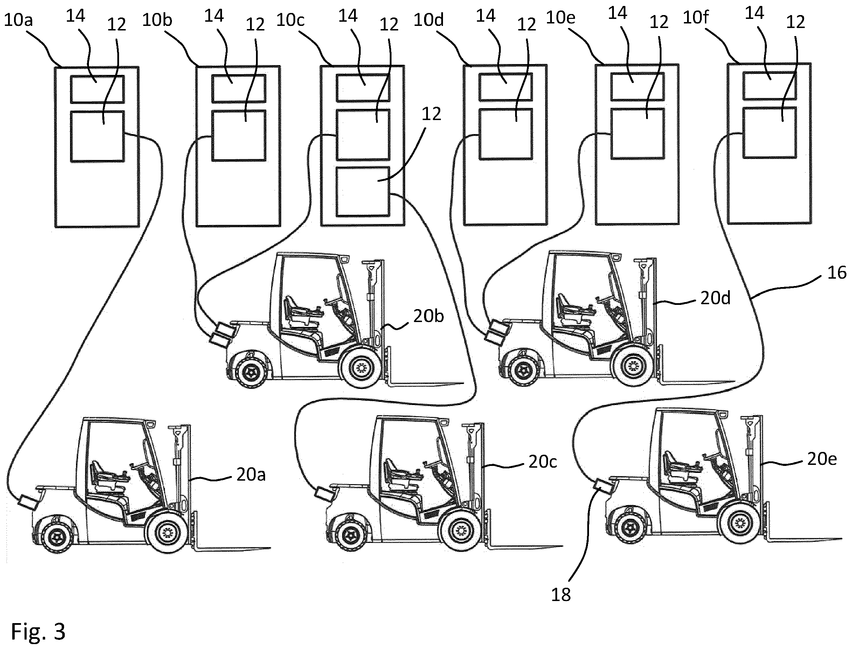

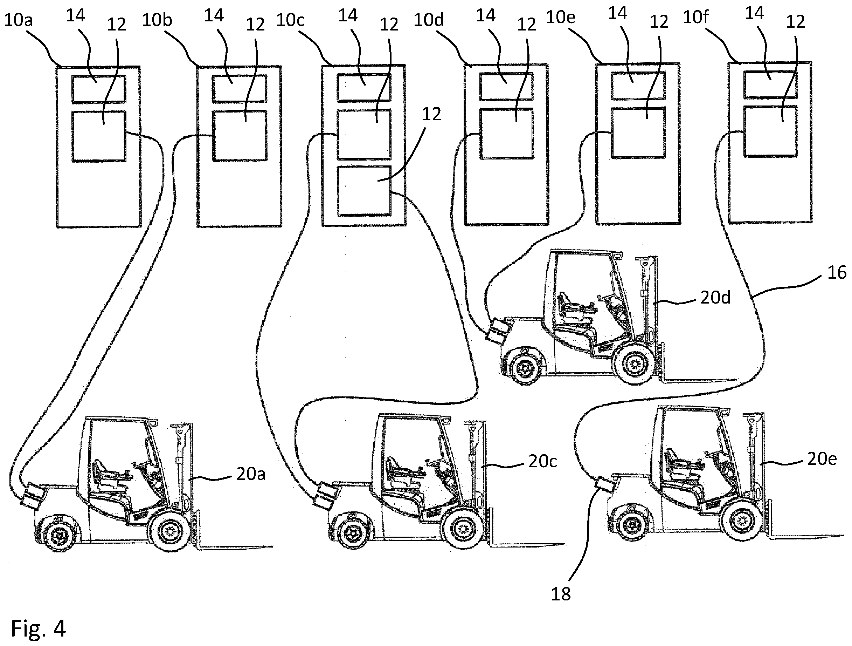

Figur 3 zeigt eine erfindungsgemäße Ladeanordnung mit sechs separaten Ladegeräten 10a, 10b, 10c, 10d, 10e und 10f. Die Ladegeräte 10a bis 10f verfügen ebenfalls jeweils über eine Steuereinheit 14 und mindestens eine Ladeeinheit 12, wobei das Ladegerät 10c über zwei Ladeeinheiten 12 verfügt. Die Ladeeinheiten 12 aller Ladegeräte 10a bis 10f verfügen über jeweils ein Ladekabel 16 mit einem Ladestecker 18 am freien Ende des Ladekabels 16. Aus Gründen der Übersichtlichkeit sind nicht alle Ladekabel und Ladestecker in Figur 3 und 4 mit Bezugszeichen versehen. Über die sechs Ladegeräte 10a bis 10f werden in unterschiedlichster Verbindung insgesamt fünf Flurförderzeuge 20a bis 20e geladen.

So wird beispielsweise das Flurförderzeug 20a bzw. dessen Batterie in bekannter Weise über ein Ladegerät 10a geladen. Das Flurförderzeug 20b wird in erfindungsgemäßer Weise durch zwei Ladegeräte, nämlich die Ladegeräte 10b, 10c, geladen. Dabei steht eine der Ladeeinheiten 12 des Ladegeräts 10c über ihren das Ladekabel 16 und den Ladestecker 18 umfassenden Ladeanschluss mit der Batterie des Flurförderzeugs 20b in Verbindung. Die zweite Ladeeinheit 12 des Ladegeräts 10c lädt über ihren Ladeanschluss 16, 18 die Batterie des Flurförderzeugs 20c. Hierin ist auch die alternative Ausgestaltung der Erfindung verwirklicht. So sind nämlich die Ladeeinheiten 12 des Ladegeräts 10c dazu ausgebildet, die Batterien unterschiedlicher Flurförderzeuge 20b, 20c gleichzeitig zu laden. Das Flurförderzeug 20d wird ebenfalls über zwei Ladegeräte gleichzeitig geladen, nämlich über Ladegeräte 10d und 10e. Ladegerät 10f schließlich lädt in bekannter Weise das Flurförderzeug 20e.

Aufgrund der erfindungsgemäßen Möglichkeit, zum einen die Batterie eines Flurförderzeugs durch mehrere Ladegeräte gleichzeitig zu laden und zum anderen mit den Ladeeinheiten nur eines Ladegeräts die Batterien unterschiedlicher Flurförderzeuge gleichzeitig zu laden, ergibt sich eine gegenüber dem Stand der Technik wesentlich größere Zahl an möglichen Verbindungen zwischen Batterien bzw. Flurförderzeugen und Ladegeräten.

So kann beispielsweise durch das Laden der Batterie eines Flurförderzeugs mittels mehrerer Ladegeräte der Ladevorgang mit einem größeren Ladestrom erfolgen als mit nur einem Ladegerät und somit der Ladevorgang verkürzt werden. Insbesondere ist dies auch möglich mit Ladegeräten, die über nur eine einzelne Ladeeinheit verfügen. Ansonsten wäre nur das Ladegerät 10c mit seinen beiden Ladeeinheiten dazu imstande, ein Flurförderzeug bzw. dessen Batterie unter Aufwendung eines höheren Ladestroms schnellzuladen. Hierfür würden dann beide Ladeeinheiten 12 mit der Batterie des Flurförderzeugs verbunden, wie in Figur 4 dargestellt. Erfindungsgemäß sind vorliegend jedoch alle Ladegeräte, also auch die mit lediglich einer Ladeeinheit, zum gemeinsamen Laden der Batterie eines Flurförderzeugs geeignet. Durch die Möglichkeit mit den Ladeeinheiten nur eines Ladegeräts die Batterien unterschiedlicher Flurförderzeuge gleichzeitig zu laden, können insbesondere mit nur einem Ladegerät zwei Flurförderzeuge bzw. deren Batterien versorgt werden. So kann das Ladegerät 10c zum Laden von zwei Flurförderzeugen insbesondere mit einem entsprechend geringeren Ladestrom verwendet werden, was beispielsweise für weniger zeitkritische Ladungen sinnvoll ist, beispielsweise bei Ladungen über Nacht, siehe Flurförderzeug 20c in Fig. 3. Auch kann aber ein anderes Ladegerät 10b zugeschaltet werden und so zusammen mit der Ladeeinheit 12 des Ladegeräts 10c ein Schnell- oder Hochstromladen erreicht werden, siehe Flurförderzeug 20b in Fig. 3.

Mit den in Figur 3 gezeigten Verbindungen der Ladegeräte mit den Flurförderzeugen können somit insbesondere die Batterien der Flurförderzeuge 20b und 20d schneller, also insbesondere mit einem höheren Ladestrom, geladen werden als die Batterien der restlichen Flurförderzeuge, welche normalgeladen werden.

Figur 4 zeigt die Ladeanordnung aus Figur 3 mit in anderer Weise mit den Ladegeräten verbundenen Flurförderzeugen. So sind hier die Ladegeräte 10a, 10b zum gemeinsamen Laden mit dem Flurförderzeug 20a verbunden und die Ladegeräte 10d und 10e zum gemeinsamen Laden mit dem Flurförderzeug 20d verbunden. Das Flurförderzeug 20c wird durch die zwei Ladeeinheiten 12 des Ladegeräts 10c schnellgeladen. Das Flurförderzeug 20e wird in bekannter Weise durch das Ladegerät 10f normalgeladen. Somit können bei der Ausgestaltung zwar weniger Flurförderzeuge gleichzeitig geladen werden als bei der Ausgestaltung in Figur 3. Allerdings können dafür drei Flurförderzeuge, nämlich die Flurförderzeuge 20a, 20c und 20d, schnellgeladen werden, also mit einem höheren Ladestrom.

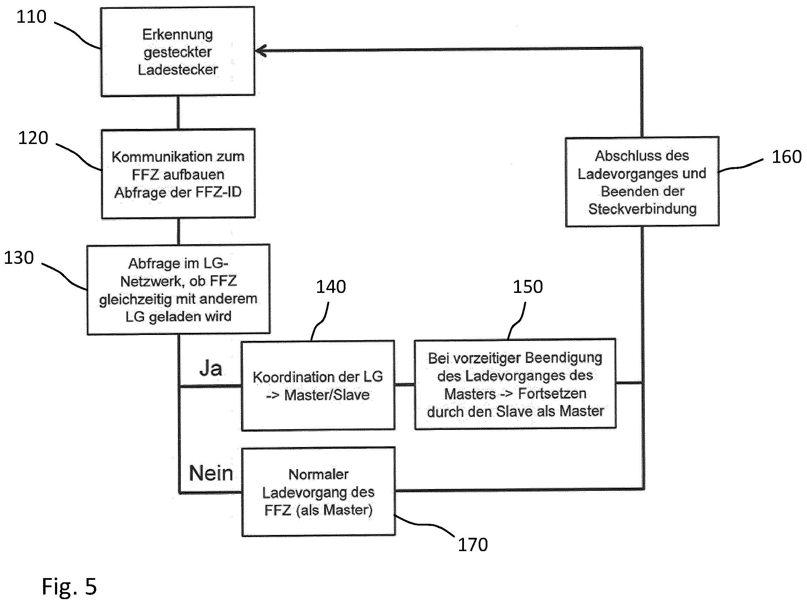

Auch die Ladegeräte in den Figuren 3 und 4 können in der erläuterten Weise als Master- bzw. Slave-Ladegeräte definiert sein und zwecks Abstimmung der gemeinsamen Ladevorgänge über ihre Steuereinheiten 14 oder über eine nicht dargestellte zentrale Steuereinheit kommunizieren. Insbesondere kann eine eindeutige Fahrzeugidentifikation der angeschlossenen Flurförderzeuge ausgelesen werden und dazu verwendet werden, festzustellen, ob eines oder mehrere der Flurförderzeuge mit mehr als einem Ladegerät verbunden sind. Das diesbezügliche Ladeverfahren wird im Folgenden anhand von Figur 5 erläutert.

Figur 5 zeigt ein Ablaufdiagramm des erfindungsgemäßen Ladeverfahrens. In einem Schritt 110 werden zunächst die mit den Ladegeräten 10a bis 10f verbundenen Batterien bzw. die die Batterien tragenden Flurförderzeuge erkannt. Dies erfolgt über die Erkennung der gesteckten Ladestecker 18, also über eine Erkennung einer hergestellten Steckverbindung zwischen den Ladesteckern 18 der Ladegeräte sowie einer Steckaufnahme der Batterien bzw. der Flurförderzeuge. Anschließend werden, wie bereits erwähnt, Fahrzeugidentifikationen der mit den Ladegeräten verbundenen Flurförderzeuge abgefragt.

Hierfür wird gemäß Schritt 120 eine Kommunikation zu den Flurförderzeugen aufgebaut. Die Kommunikation kann über die hergestellte Ladeverbindung, also über die Ladekabel 16, oder über separate Kommunikationsmittel erfolgen. Beispielsweise können die Ladegeräte bzw. eine zentrale Steuereinheit und die Flurförderzeuge kabellos miteinander kommunizieren.

In Schritt 130 wird schließlich in einem durch die Ladegeräte 10a bis 10f gebildeten Ladegeräte-Netzwerk abgefragt, ob eines oder mehrere der angeschlossenen Flurförderzeuge mit mehr als einem der Ladegeräte gleichzeitig verbunden ist. Es wird also, insbesondere über die Steuereinheiten 14 oder über die zentrale Steuereinheit, erkannt, ob eine Batterie eines Flurförderzeugs mit mindestens zwei Ladegeräten verbunden ist.

Ist dies der Fall, erfolgt gemäß Schritt 140 eine Koordination zwischen den Ladegeräten zwecks Festlegung der Ladegeräte als Master oder als Slave. Es wird also eines der an einem gemeinsamen Ladevorgang für ein Flurförderzeug beteiligten Ladegeräte als Master bestimmt, während die weiteren an dem Ladevorgang beteiligten Ladegeräte als Slave festgelegt werden. Das Master-Ladegerät steuert den Ladevorgang für die jeweilige Batterie in der erläuterten Weise.

Sollte das Master-Ladegerät seinen Ladevorgang vorzeitig beenden, beispielsweise durch Lösen des Ladekabels 16 und des Ladestecker 18 von dem jeweiligen Flurförderzeug, so setzt gemäß Schritt 150 eines der Slave-Ladegeräte den Ladevorgang als Master fort. Wird also das Master-Ladegerät getrennt, so unterbricht der gemeinsame Ladevorgang nicht, sondern wird durch die verbleibenden Ladegeräte fortgesetzt. Eines der zuvor als Slave-Ladegeräte arbeitenden Ladegeräte steuert dann als Master den weiteren Ladevorgang. Insbesondere kann auch nur ein Ladegerät übrig bleiben.

In Schritt 160 wird anschließend der Ladevorgang, insbesondere bei vollständig geladener Batterie des Flurförderzeugs, abgeschlossen und die Steckverbindung zwischen Batterie und den Ladegeräten gelöst. Das Verfahren kann von neuem beginnen.

Sollte in Schritt 130 festgestellt werden, dass eine Batterie nur mit einem der Ladegeräte der Ladeanordnung verbunden ist, so erfolgt gemäß Schritt 170 ein normaler Ladevorgang der Batterie des Flurförderzeugs nur mit einem Ladegerät, wobei dieses Ladegerät dann üblicherweise als Master arbeitet.

### Bezugszeichenliste

- 10a-f: Ladegeräte
- 12: Ladeeinheit
- 14: Steuereinheit
- 16: Ladekabel
- 18: Ladestecker
- 20a-e: Flurförderzeug

## Patentansprüche

1. Ladeanordnung umfassend mehrere Ladegeräte (10a-10f) zum Laden der Batterien von Flurförderzeugen (20), wobei die Ladeanordnung dazu ausgebildet ist, zu erkennen, ob eine Batterie eines Flurförderzeugs (20) mit mindestens zwei Ladegeräten (10a, 10b) der mehreren Ladegeräte (10a-f) verbunden ist und die Batterie über die mindestens zwei Ladegeräte (10a, 10b) gleichzeitig zu laden, wenn eine Verbindung zu den mindestens zwei Ladegeräten (10a, 10b) erkannt wurde.

2. Ladeanordnung nach Anspruch 1, **dadurch gekennzeichnet, dass** die Ladegeräte (10a-10f) voneinander getrennt ausgebildet sind.

3. Ladeanordnung nach Anspruch 1 oder 2, **dadurch gekennzeichnet**, die Ladegeräte (10a-10f) dazu ausgebildet sind, wahlweise als Master oder als Slave zu arbeiten, wobei eines der mindestens zwei Ladegeräte (10a, 10b) als Master den gemeinsamen Ladevorgang steuert und die weiteren der mindestens zwei Ladegeräte (10a, 10b) als Slave arbeiten, wenn das Laden der Batterie über die mindestens zwei Ladegeräte (10a, 10b) erfolgt.

4. Ladeanordnung nach Anspruch 3, **dadurch gekennzeichnet, dass** die als Slave definierten Ladegeräte dazu ausgebildet sind, den Ladevorgang als Master fortzuführen, wenn der Ladevorgang durch das bisherige Master-Ladegerät beendet wird.

5. Ladeanordnung nach einem der vorhergehenden Ansprüche, **dadurch gekennzeichnet, dass** die Ladeanordnung dazu ausgebildet ist, das Bestehen einer Ladeverbindung zwischen der Batterie und den mindestens zwei Ladegeräten (10a, 10b) durch Auslesen einer eindeutigen Identifikation der mit den Ladegeräten (10a, 10b) verbundenen Batterie und/oder des die Batterie tragenden Flurförderzeugs (20) zu erkennen.

6. Ladeanordnung nach einem der vorhergehenden Ansprüche, **dadurch gekennzeichnet, dass** zumindest eines der Ladegeräte (10a-10f) mindestens zwei Ladeeinheiten (12) aufweist, wobei die Ladeeinheiten (12) desselben Ladegeräts (10a-10f) dazu ausgebildet sind, die Batterien unterschiedlicher Flurförderzeuge (20) zu laden.

7. Ladeverfahren für mehrere Ladegeräte (10a-10f) zum Laden der Batterien von Flurförderzeugen (20), umfassend die Schritte:
- Erkennen, ob eine Batterie eines Flurförderzeugs (20) mit mindestens zwei Ladegeräten (10a, 10b) der mehreren Ladegeräte (10a-10f) verbunden ist,
- Laden der Batterie über die mindestens zwei Ladegeräte (10a-10f) gleichzeitig, wenn eine Verbindung zu den mindestens zwei Ladegeräten (10a, 10b) erkannt wurde.

8. Ladeverfahren nach Anspruch 7, **gekennzeichnet durch** Definition eines der mindestens zwei Ladegeräte (10a, 10b) als Master und der übrigen der mindestens zwei Ladegeräte (10a, 10b) als Slave, wenn das Laden der Batterie über die mindestens zwei Ladegeräte (10a, 10b) erfolgt, wobei das als Master definierte Ladegerät den gemeinsamen Ladevorgang steuert.

9. Ladeverfahren nach Anspruch 8, **gekennzeichnet durch** Fortführen des Ladevorgangs durch eines der Slave-Ladegeräte als Master, wenn der Ladevorgang durch das bisherige Master-Ladegerät beendet wird.

10. Ladeverfahren nach einem der Ansprüche 7 bis 9, **gekennzeichnet durch** Erkennen der Verbindung der Batterie mit den mindestens zwei Ladegeräten (10a, 10b) durch Auslesen einer eindeutigen Identifikation der mit den Ladegeräten (10a, 10b) verbundenen Batterie und/oder des die Batterie tragenden Flurförderzeugs (20).

11. Ladeverfahren nach einem der Ansprüche 7 bis 10, **dadurch gekennzeichnet, dass** zumindest eines der Ladegeräte (10a-10f) mindestens zwei Ladeeinheiten (12) aufweist, wobei die Batterien unterschiedlicher Flurförderzeuge (20) durch die Ladeeinheiten (12) desselben Ladegeräts (10a-10f) geladen werden.

12. System aus mindestens einem Flurförderzeug (20) und einer Ladeanordnung nach einem der Ansprüche 1 bis 6, **dadurch gekennzeichnet, dass** die Batterie des Flurförderzeugs (20) über die mindestens zwei Ladegeräte (10a, 10b) gleichzeitig geladen wird.

13. Ladegerät zum Laden der Batterien von Flurförderzeugen (20), umfassend mindestens zwei Ladeeinheiten (12), wobei die Ladeeinheiten (12) des Ladegeräts dazu ausgebildet sind, die Batterien unterschiedlicher Flurförderzeuge (20) gleichzeitig zu laden.
